Europäisches Patentamt

**European Patent Office**

**Office européen des brevets**

(19)

(11) Numéro de publication: **0 383 641**
**A1**

(12) **DEMANDE DE BREVET EUROPEEN**

(21) Numéro de dépôt: **90400139.3**

(22) Date de dépôt: **18.01.90**

(51) Int. Cl.⁵: **C09K 3/32**

(30) Priorité: **17.02.89 FR 8902099**

(43) Date de publication de la demande:
**22.08.90 Bulletin 90/34**

(84) Etats contractants désignés:
**AT BE CH DE DK ES FR GB GR IT LI LU NL SE**

(71) Demandeur: **NORSOLOR, Société Anonyme dite:**
**18 place des Reflets Tour Aurore**
**F-92080 Paris la Défense 2(FR)**

(72) Inventeur: **Duquenne, Daniel**
**16, rue Emile Combes**
**Fitz James, F-60600 Clermont(FR)**

(74) Mandataire: **Chaillot, Geneviève**
**Cabinet CHAILLOT 21, avenue Louise de Bettignies**
**F-92700 Colombes(FR)**

(54) **Composition et procédé pour absorber des produits polluants.**

(57) Composition pour absorber des produits polluants, comprenant au moins un polymère du norbornène pour 100 parties en poids de polymère du norbornène ; ladite composition comprend de 5 à 250 parties en poids d'au moins un agent de cassage d'émulsion aqueuse d'huile hydrosoluble.

Application à un procédé d'absorption de l'huile hydrosoluble contenue dans un fluide de coupe.

# COMPOSITION ET PROCEDE POUR ABSORBER DES PRODUITS POLLUANTS

La présente invention se rapporte au domaine de la dépollution et, plus particulièrement, à une composition et un procédé pour absorber des produits polluants.

L'industrie mécanique emploie toutes sortes d'huiles qui, lorsqu'elles ne peuvent être récupérées de manière satisfaisante en vue d'une seconde utilisation, doivent être éliminées après usage. Ce problème se pose en particulier pour les fluides, dits "fluides de coupes", utilisés pour refroidir certaines pièces de machines-outils telles que tours, fraiseuses, etc. Dans le cas des fluides de coupes, qui sont généralement composés d'eau, d'huile hydrosoluble et d'additifs, le problème de leur élimination après usage est particulièrement malaisé à résoudre. Cette élimination s'effectue actuellement par différents moyens dont aucun ne donne réellement satisfaction techniquement et économiquement. Premier moyen, l'élimination clandestine par mise à l'égout ou déversement dans une rivière doit être évité pour des raisons réglementaires évidentes de pollution des rivières et/ou des nappes phréatiques. Second moyen généralement utilisé par les entreprises disposant de modestes quantités de fluides de coupes à éliminer, l'enlèvement des déchets liquides par des entreprises de traitement spécialisées est d'un coût élevé. Troisième moyen adapté aux entreprises disposant de quantités élevées de fluides de coupes à éliminer, le traitement des fluides de coupes directement par l'utilisateur peut avoir recours à plusieurs méthodes. Ces méthodes ont généralement en commun de casser l'émulsion aqueuse d'huile hydrosoluble de manière à pouvoir séparer et récupérer ladite huile. Une première méthode consiste ainsi à casser l'émulsion au moyen de sulfate de fer, puis à neutraliser le milieu au moyen de chaux. L'inconvénient manifeste de cette méthode réside dans la coloration de l'eau résiduelle et dans la pollution annexe causée par le sulfate de fer. Une seconde méthode consistant à casser l'émulsion au moyen de tensio-actifs se traduit par une demande chimique en oxygène trop élevée dans l'eau résiduelle. Une troisième méthode utilisant l'ultra-filtration, l'osmose inverse ou la dialyse nécessite un dispositif coûteux et peu performant. Une quatrième méthode utilisant le chlorure de calcium comme agent de cassage permet de récupérer l'huile à la surface de l'eau, mais se traduit par une demande chimique en oxygène trop élevée dans l'eau résiduelle. Enfin, une cinquième méthode associant du chlorure de calcium comme agent de cassage à une silice ultrafine hydrophobe comme agent d'absorption conduit à l'obtention d'une boue contenant l'huile au fond du réservoir de traitement, ce qui complique substantiellement la récupération du produit polluant.

Il ressort de l'exposé ci-dessus qu'à ce jour le problème de l'élimination des fluides de coupes après usage n'a pas reçu de solution qui soit à la fois satisfaisante du point de vue de la sauvegarde de l'environnement (niveau acceptable de la demande chimique en oxygène dans l'eau résiduelle), économique et facile à mettre en oeuvre tant du point de vue du cassage de l'émulsion contenue dans les fluides de coupes que du point de vue du mode de récupération de l'huile hydrosoluble. Ce problème constitue celui auquel s'intéresse la présente invention.

Par ailleurs, il est connu par le brevet FR-A-2 288 709 un procédé d'enlèvement et de récupération de produits pétroliers, notamment d'hydrocarbures lourds, répandus sur une surface liquide ou solide par mise en contact, avec ledit produit pétrolier, d'un polymère finement divisé capable de produire avec le produit pétrolier une pellicule possédant une résistance suffisante pour pouvoir être tractée, puis enlèvement de ladite pellicule par des moyens mécaniques. Un polymère préféré pour la mise en oeuvre de ce procédé est un polymère du bicyclo(2.2.1) heptène-2 ou de son dérivé méthylé, ces polymères formant avec les hydrocarbures pétroliers une pellicule cohérente pouvant contenir jusqu'à 10 parties en poids de produits pétroliers pour une partie de polymère. La mise en contact du polymère avec le produit pétrolier s'effectue, selon ce procédé connu, par simple saupoudrage du polymère à la surface dudit produit.

La demande de brevet WO 88/06 141 s'intéresse principalement, en vue de résoudre les problèmes posés par l'épandage d'un polymère en poudre par temps de vent, à la manière dont ce polymère entre en contact avec les produits polluants à absorber et propose d'améliorer l'efficacité du polymère en l'enfermant dans une housse à maille fine.

Enfin, le brevet US-A-4 058 453 décrit un procédé pour récupérer l'huile d'une émulsion contenant de l'argile comme agent stabilisant, consistant d'abord à ajouter à l'émulsion de 10 à 60 ppm d'un polyoxyde d'éthylène ayant un poids moléculaire de $10^5$ à $7.10^6$ ainsi que de 100 à 20 000 ppm d'un halogénure de métal alcalino-terreux en solution aqueuse, puis à séparer l'huile de l'eau et de l'argile.

L'invention est basée sur la découverte qu'en associant un agent de cassage d'une émulsion aqueuse d'huile hydrosoluble, tel que le chlorure de calcium, à un agent d'absorption constitué d'un polymère de norbornène, on dispose d'un moyen efficace, économique et facile à mettre en oeuvre pour éliminer des fluides de coupes après usage.

Ainsi, un premier objet de la présente invention consiste en une composition pour absorber des produits polluants comprenant au moins un polymère du norbornène, caractérisée en ce qu'elle comprend en outre au moins un agent de cassage d'une émulsion aqueuse d'huile hydrosoluble et en ce que, pour 100 parties en poids de polymère du norbornène, ladite composition comprend de 5 à 250 parties en poids dudit agent de cassage d'émulsion.

Un agent de cassage d'émulsion préféré pour la mise en oeuvre de la présente invention est un halogénure de métal alcalino-terreux tel que notamment le chlorure de calcium.

La composition selon l'invention peut en outre comprendre au moins un plastifiant du polymère de norbornène, de préférence à raison de 5 à 50 parties en poids pour 100 parties en poids dudit polymère.

Par polymère de norbornène au sens de la présente invention, on entend un polymère choisi parmi le polycyclo[2,2,1] heptène-2 et le polyméthyl-5-bicyclo[2,2,1] heptène-2. Par plastifiant du polymère de norbornène, on entend un agent capable d'agglomérer la poudre dudit polymère tout en lui impartissant un certain degré de plastification, tel qu'un composé peu volatil choisi parmi les hydrocarbures aliphatiques, alkylaromatiques, aromatiques et naphténiques, et les esters organiques dérivés des alcools aliphatiques et cyclaniques (tels que phtalates, adipates, sébacates, etc.) et leurs mélanges.

La composition selon l'invention peut en outre comprendre les adjuvants usuels suivants :
- au moins un antimottant, tel qu'un stéarate métallique, en une proportion allant jusqu'à 5% en poids par rapport au polymère,
- au moins un colorant en proportion habituelle,
- au moins un agent déodorant,
- au moins une charge minérale, telle que talc, silice, cendres volantes, argile, alumine, etc. ou organique, telle que cellulose, polyéthylène, polypropylène ou polystyrène fibreux ou en poudre, etc.

La composition selon l'invention peut être mise en oeuvre de différentes manières en vue d'éliminer des fluides de coupes après usage. C'est pourquoi, la présente invention a pour second objet un procédé d'absorption de l'huile hydrosoluble contenue dans un fluide de coupe, caractérisé en ce qu'on met ledit fluide en présence d'au moins une composition telle que décrite précédemment. Cette mise en présence peut s'effectuer par exemple en faisant passer le fluide de coupe à traiter sur un filtre garni de la composition selon l'invention. La mise en présence peut également s'effectuer en versant la composition selon l'invention dans un réservoir contenant le fluide de coupe et en agitant celui-ci de manière telle que la composition se disperse de manière homogène dans le fluide de coupe. L'homogénéité de la dispersion pourra en particulier être contrôlée par le biais de la vitesse d'agitation, laquelle dépendra de la température, de la composition du fluide de coupe, de la taille et de la forme du réservoir. Dans ce second mode de mise en oeuvre du procédé selon l'invention, on utilisera avantageusement une proportion de composition par rapport au fluide de coupe telle que la quantité de polynorbornène représente de 10 à 100%, de préférence, de 20 à 45%, en poids, de la quantité d'huile contenue dans le fluide de coupe.

Les exemples suivants sont donnés à titre illustratif et non limitatif de la présente invention.

Exemple 1 (comparatif)

On considère un fluide de coupe constitué d'une émulsion d'huile minérale (commercialisée par la société SHELL sous la référence S 7353) à 6% en poids dans l'eau, possédant une demande chimique en oxygène égale à 76 000. A cette émulsion versée dans un réservoir, on ajoute 2,5% en poids de chlorure de calcium, sous agitation. La phase huileuse monte à la surface de l'émulsion et la demande chimique en oxygène mesurée dans la phase aqueuse résiduelle est égale à 1760.

Exemple 2

A l'émulsion d'huile minérale de l'exemple 1, on ajoute, sous agitation, 5% en poids d'une composition comprenant, pour 100 parties en poids, 50 parties de chlorure de calcium, 40 parties de polynorbornène, commercialisé par la demanderesse sous la dénomination NORSOREX AP et 10 parties d'une huile naphténique commercialisée par le société NYNAS sous la dénomination NYTENE 10. Ainsi, la proportion de chlorure de calcium pendant le traitement est identique à celle de l'exemple 1. A l'issue du traitement, on récupère une galette surnageant à la surface du réservoir et la demande chimique en oxygène mesurée dans la phase aqueuse résiduelle est égale à 350. Contrairement au résultat de l'exemple 1, la galette peut aisément être tractée et récupérée.

**Revendications**

1 - Composition pour absorber des produits polluants, comprenant au moins un polymère du norbornène, caractérisée en ce qu'elle comprend,

en outre, au moins un agent de cassage d'une émulsion aqueuse d'huile hydrosoluble, et en ce que, pour 100 parties en poids de polymère du norbornène, ladite composition comprend de 5 à 250 parties en poids dudit agent de cassage d'émulsion.

2 - Composition selon la revendication 1, caractérisée en ce que l'agent de cassage d'émulsion est un halogénure de métal alcalino-terreux.

3 - Composition selon l'une des revendications 1 et 2, caractérisée en ce qu'elle comprend en outre au moins un plastifiant du polymère de norbornène.

4 - Composition selon l'une des revendications 1 à 3, caractérisée en ce qu'elle comprend en outre au moins un agent antimottant en une proportion allant jusqu'à 5% en poids par rapport au polymère de norbornène.

5 - Composition selon l'une des revendications 1 à 4, caractérisée en ce qu'elle comprend en outre au moins une charge.

6 - Composition selon la revendication 5, caractérisée en ce que ladite charge est une charge minérale choisie parmi talc, silice, argile, alumine et cendres volantes.

7 - Composition selon la revendication 5, caractérisée en ce que la charge est une charge organique choisie parmi cellulose, polyéthylène, polypropylène, ou polystyrène fibreux ou en poudre.

8 - Procédé d'absorption de l'huile hydrosoluble contenue dans un fluide de coupe, caractérisé en ce qu'on met ledit fluide en présence d'au moins une composition selon la revendication 1.

9 - Procédé selon la revendication 8, caractérisé en ce que la mise en présence s'effectue en faisant passer le fluide de coupe à traiter sur un filtre garni de ladite composition.

10 - Procédé selon la revendication 8, caractérisé en ce que la mise en présence s'effectue en versant ladite composition dans un réservoir contenant le fluide de coupe et en agitant celui-ci de manière telle que la composition se disperse de manière homogène dans le fluide de coupe.

11 - Procédé selon la revendication 10, caractérisé en ce que l'on utilise une proportion de composition par rapport au fluide de coupe, telle que la quantité de polynorbornène représente de 10 à 100% de la quantité d'huile contenue dans le fluide de coupe.

12 - Procédé selon la revendication 11, caractérisé en ce que la quantité de polynorbornène représente de 20 à 45% de la quantité d'huile contenue dans le fluide de coupe.

13 - Composition selon la revendication 3, caractérisée en ce qu'elle comprend de 5 à 50 parties en poids de plastifiant pour 100 parties en poids de polymère de norbornène.

14 - Composition selon l'une des revendications 3 et 13, caractérisée en ce que le plastifiant du polymère de norbornène est un composé peu volatil, choisi parmi les esters organiques dérivés des alcools aliphatiques et cyclaniques, les hydrocarbures aliphatiques, aromatiques, alkylaromatiques et naphténiques et leurs mélanges.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | WO-A-8 806 141 (NORSOLOR)<br>* Revendications 1,9,11; page 3, lignes 15-18; page 5, ligne 1; exemple 3 *<br>--- | 1,2,4,8,11 | C 09 K   3/32 |
| Y | US-A-4 058 453 (PATEL)<br>* Revendications 1,2,9; exemple 3 *<br>--- | 1,2,4,8,11 | |
| A | FR-A-2 288 709 (SOCIETE CHIMIQUE DES CHARBONNAGES)<br>* Revendications 1-3 *<br>----- | 1,11 | |

**DOMAINES TECHNIQUES RECHERCHES (Int. Cl.5)**

C 09 K
C 02 F
C 10 G

**Le présent rapport a été établi pour toutes les revendications**

| Lieu de la recherche | Date d'achèvement de la recherche | Examinateur |
|---|---|---|
| LA HAYE | 06-03-1990 | NICOLAS H.J.F. |